Europäisches Patentamt

European Patent Office

Office européen des brevets

(19)

(11) Numéro de publication : **0 335 764 B1**

(12)

# FASCICULE DE BREVET EUROPEEN

(45) Date de publication du fascicule du brevet :
**13.05.92 Bulletin 92/20**

(51) Int. Cl.$^5$ : **B60T 8/18,** B60T 8/30

(21) Numéro de dépôt : **89400716.0**

(22) Date de dépôt : **15.03.89**

(54) **Correcteur de freinage asservi à la charge d'un véhicule en fonction de l'assiette de ce dernier.**

(30) Priorité : **30.03.88 FR 8804164**

(43) Date de publication de la demande :
**04.10.89 Bulletin 89/40**

(45) Mention de la délivrance du brevet :
**13.05.92 Bulletin 92/20**

(84) Etats contractants désignés :
**DE ES FR GB IT**

(56) Documents cités :
**EP-A- 0 156 666**
**EP-A- 0 223 641**
**FR-A- 2 499 922**
**GB-A- 1 542 507**

(73) Titulaire : **BENDIX EUROPE Services Techniques S.A.**
**126 rue de Stalingrad**
**F-93700 Drancy (FR)**

(72) Inventeur : **Carre, Jean-Jacques Bendix France**
**DIVISON TECHNIQUE 126 Rue de Stalingrad**
**F-93700 Drancy (FR)**
Inventeur : **Picot, Pascal Bendix France**
**DIVISON TECHNIQUE 126 Rue de Stalingrad**
**F-93700 Drancy (FR)**

EP 0 335 764 B1

## Description

La présente invention concerne les correcteurs de freinage, et, plus particulièrement à un tel correcteur asservi à la charge d'un véhicule malgré la variation éventuelle de la hauteur de l'assiette de ce dernier.

On sait qu'il est souhaitable de relier un correcteur de freinage directement à la suspension d'un véhicule en vue de faire varier le freinage des roues du véhicule en fonction de sa charge.

On connaît du document GB-A- 1 577 029 un correcteur de freinage asservi à la charge d'un véhicule, qui est disposé à une extrémité d'un ressort de suspension du véhicule et relié au ressort par un ensemble de cames de façon à faire varier la pression de freinage en fonction de la charge. Ce dispositif présente les inconvénients en ce qu'il comprend un nombre important de pièces, ce qui le rend onéreux et peu fiable.

Pour pallier les inconvénients d'une liaison mécanique entre un correcteur et la suspension d'un véhicule on a proposé de relier le correcteur hydrauliquement à la suspension.

On connaît du document FR-A-1 288 940 installation de freinage pour véhicule dans laquelle un émetteur hydraulique est monté entre un ressort-lame de suspension et le châssis du véhicule, cet émetteur étant relié hydrauliquement à un correcteur de freinage de façon à faire fonctionner ce dernier en fonction de la charge du véhicule.

Ce dispositif présente des inconvénients en ce qu'il ne se prête pas à être utilisé avec un ressort de suspension hélicoïdal.

Le document EP-A-0 283 328 décrit un correcteur de freinage muni d'un capteur fluidique de pression, le correcteur comprenant un corps creusé d'un alésage dans lequel est monté à coulissement un piston agencé de façon à coopérer avec un élément de clapet pour commander un passage de fluide entre une entrée et une sortie du correcteur, le capteur fluidique de pression comprenant un piston monté à coulissement dans un cylindre et destiné à être déplacé dans le cylindre par un ressort de suspension du véhicule sur lequel l'ensemble est monté, la variation d'effort sur le piston provoquant une variation de pression du fluide contenu dans le cylindre, le correcteur et le capteur fluidique de pression étant reliés fluidiquement de manière que la variation de pression agisse sur le piston du correcteur.

Le capteur fluidique de pression est conformé pour coopérer avec une extrémité du ressort de suspension et présente une forme sensiblement complémentaire de celle de cette extrémité.

Cette solution obvie aux inconvénients précités et constitue une remarquable avance dans l'Art. Toutefois, elle ne convient pas dès lors que le conducteur du véhicule peut choisir différentes hauteurs d'assiette pour son véhicule. En effet, selon la hauteur de l'assiette, la pression du capteur fluidique change, et la réponse du correcteur de freinage peut être fausse ou incomplète.

La présente invention a donc pour but d'éviter que la réponse d'un correcteur de freinage du type précité soit modifié en fonction de la hauteur de l'assiette du véhicule.

Le document GB-A-1 542 507 décrit de façon générale un tel correcteur. Selon ce document, le correcteur comprend un capteur fluidique de pression, un corps dans lequel est monté à coulissement au moins un piston commandé par une tige d'actionnement et agencé de façon à coopérer avec un élément de clapet pour commander un passage de fluide de freinage entre une entrée et une sortie du correcteur, et un capteur de la hauteur de l'assiette du véhicule comprenant un levier dont une extrémité est reliée à un point intermédiaire du levier étant relié à une extrémité de la tige d'actionnement, extrémité faisant saillie du corps.

Dans ce correcteur selon l'Art Antérieur, c'est la hauteur du pivot du levier qui est modifiée en fonction de la pression reçue par le capteur fluidique de pression. Un module fragile et coûteux est alors ajouté entre la caisse du véhicule et le pivot pour assurer le déplacement de ce dernier.

La présente invention a pour but de simplifier un tel correcteur et d'appliquer directement de façon combinée à la tige d'actionnement les forces déterminées par les réponses respectives du capteur de hauteur et du capteur fluidique.

Le but de l'invention est atteint grâce aux caractéristiques décrites dans la première revendication.

L'invention sera mieux comprise et d'autres buts, avantages et particularités de celle-ci apparaîtront plus clairement à la lecture de la description qui suit de modes de réalisation préférés donnés à titre purement indicatif et non limitatif et à laquelle sont jointes deux planches de dessins sur lesquelles:

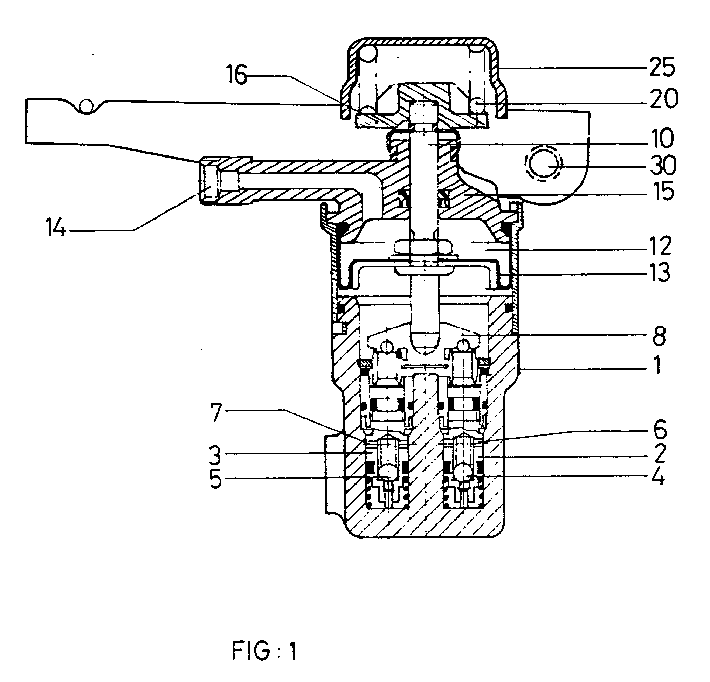

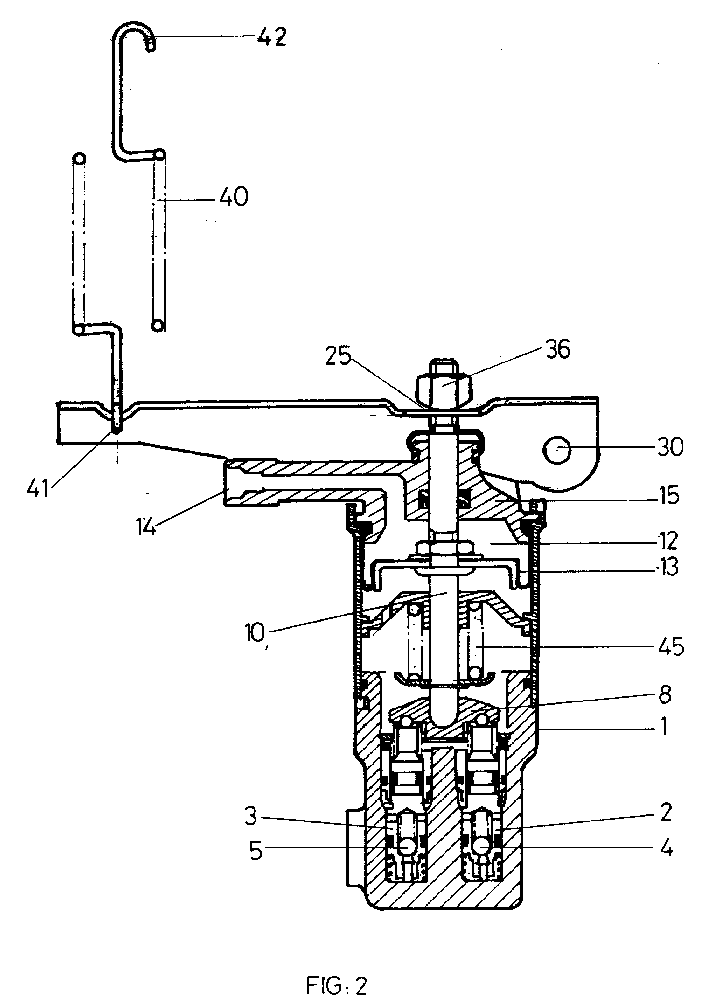

les Figures 1 et 2 représentent schématiquement le corps d'un correcteur de freinage selon deux modes différents de réalisation de la présente invention.

En référence maintenant à la Figure 1 sur laquelle les capteurs, tant le capteur fluidique que le capteur de la hauteur d'assiette, n'ont pas été représentés puisqu'ils sont bien connus de l'Homme de l'Art, le corps représenté est celui d'un correcteur de freinage du type double, c'est à dire effectuant la correction désirée dans deux circuits de freinage distincts. L'invention s'applique aussi bien à un correcteur de freinage de type simple. Le fonctionnement du correcteur proprement dit ne sera pas décrit ici puisqu'il est bien connu de l'Homme de l'art qui pourra éventuellement se reporter au document EP-A-0 283 328 précité.

Le corps 1 enferme donc ici deux pistons 2 et 3 commandant les clapets 4 et 5. Chaque piston 2, 3 est, d'une part, soumis à la pression du fluide à l'entrée 6,7 respectivement, et d'autre part, à la force exercée par un palonnier 8 sur lequel vient s'appuyer une tige d'actionnement 10.

Une chambre 12, de volume variable, est déterminée à l'intérieur du corps 1 au moyen d'une membrane souple et étanche 13. Cette chambre 12 est reliée par le conduit 14 au capteur fluidique de pression (non représenté). La membrane 13 est fermement fixée à la tige 10 de façon étanche, par exemple par collage ou au moyen d'un épaulement sur lequel un boulon vient écraser la membrane. Des joints appropriés sont disposés de manière à éviter toute fuite du fluide enfermé dans la chambre 12.

Comme on peut le remarquer Figure 1, la tige d'actionnement 10 traverse la membrane 13, ainsi que le couvercle 15 du corps duquel elle fait saillie. Un coupelle 16 emboîte l'extrémité de la tige faisant saillie du couvercle 15, à une distance suffisante de ce dernier pour que, lors du mouvement de la tige 10, elle ne puisse venir en butée sur le couvercle 15.

Un ressort de compression 20 prend, d'une part, appui sur la coupelle 16 et, d'autre part, sur un point 25 d'un levier inclus dans le capteur de la hauteur de l'assiette du véhicule. De préférence, le pivot 30 du levier est solidaire du corps 1 donc du châssis, tandis qu'une extrémité du levier est relié à un point non suspendu du véhicule. Le point 25 correspond alors à un point intermédiaire du levier entre le pivot et l'extrémité précitée.

Ainsi, on constate que la tige d'actionnement 10 est susceptible d'être entraînée en translation longitudinale, d'une part, par la membrane souple en fonction de la charge du véhicule et, d'autre part, sous l'effet du ressort 20 en fonction de la hauteur de l'assiette du véhicule.

On obtient ainsi l'effet recherché, c'est à dire avoir sensiblement le même point de coupure dans tous les cas de hauteur d'assiette. En effet, pour une charge déterminée, la pression dans la chambre 12 est inférieure en assiette basse du véhicule à celle qui y règne en assiette haute, tandis que la force exercée par le ressort 20 est supérieure en assiette basse à celle exercée en assiette haute. De ce fait, les deux origines possibles de l'effort exercé par la tige 10 sur les pistons 2 et 3 se combinent pour maintenir un point de coupure du correcteur sensiblement constant quelque soit la hauteur de l'assiette du véhicule.

Dans l'exemple représenté Figure 1, la plage des valeurs du point de coupure est telle que la force exercée par le ressort 20 est dirigée dans le même sens que celle exercée par la membrane 13 sur la tige 10. Il peut cependant arriver pour certains véhicules, que les forces exercées doivent être dirigées en sens contraires. Dans ce cas, comme représenté Figure 2, la tige 10 traverse librement le point 25 du levier et la coupelle 16 est favorablement remplacée par un écrou 36 qui sert d'épaulement pour exercer une force ascendante.

L'extrémité du bras de levier est alors fixée à une extrémité 41 d'un ressort de traction 40 dont l'autre extrémité 42 est fixée à un point non suspendu du véhicule. De préférence, on ajoute un ressort de compression 45 agissant également sur la tige d'actionnement, de manière à s'opposer au moins partiellement à la force exercée par le ressort de traction 40.

Bien que seuls deux modes préférés de réalisation de l'invention aient été décrits, il est évident que l'Homme de l'Art pourra y apporter de nombreuses modifications sans sortir du cadre de l'invention telle que définie par les revendications.

## Revendications

1. Correcteur de freinage destiné à être asservi à la charge d'un véhicule malgré la variation éventuelle de la hauteur de l'assiette de ce dernier, comprenant un capteur fluidique de pression, un corps (1) dans lequel est monté à coulissement au moins un piston (2, 3) commandé par une tige d'actionnement (10) et agencé de façon à coopérer avec un élément de clapet (4, 5) pour commander un passage du fluide de freinage entre une entrée et une sortie du correcteur et comprenant un levier dont une extrémité est reliée à un point non suspendu du dit véhicule, un point intermédiaire (25) du dit levier étant relié à une extrémité de la tige d'actionnement (10) opposée au dit piston (2, 3), extrémité faisant saillie du dit corps (1), caractérisé en ce que le pivot (30) du dit levier est solidaire du dit corps (1), que la dite tige d'actionnement (10) est également susceptible d'être entraînée en translation longitudinalement par une membrane soupe étanche (13) déterminant à l'intérieur du dit corps (1) une chambre de volume variable (12) reliée au dit capteur fluidique de pression et que le dit capteur fluidique est disposé entre la caisse véhicule et l'extrémité correspondante d'un ressort de suspension du véhicule.

2. Correcteur selon la revendication 1, caractérisé en ce qu'il comprend en outre un moyen élastique (20, 40).

3. Correcteur selon la revendication 2, caractérisé en ce que le dit moyen élastique (20) est un ressort de compression disposé entre le dit point intermédiaire (25) et la dite extrémité de la tige (10).

4. Correcteur selon la revendication 3, caractérisé en ce que la dite extrémité de la tige (10) est pourvue d'une coupelle (16) sur lequel prend appui le dit ressort (20).

5. Correcteur selon la revendication 2, caractérisé en ce que le dit moyen élastique est un ressort de traction (40) disposé entre la dite extrémité du levier et le dit point non suspendu du dit véhicule, et que la dite tige qui traverse le dit levier au dit point intermédiaire (25), est pourvue d'un épaulement (36) à son extrémité, sur lequel le dit levier peut exercer une force ascendante. 6. Correcteur selon la revendication 5, caractérisé en ce qu'il comprend en outre un ressort de compression (45) prenant appui sur le dit corps et agissant sur la dite tige (10) en s'opposant à la force exercée par le dit ressort de traction (40).

## Patentansprüche

1. Bremskraftregler, der dazu vorgesehen ist, unabhängig von einer eventuellen Veränderung der Höhenlage eines Fahrzeugs der Fahrzeuglast nachgeregelt zu werden, mit einem FluiddruckMeßwertaufnehmer, einem Körper (1), in dem wenigstens ein Kolben (2, 3) verschiebbar angebracht ist, der von einem Betätigungsstift (10) gesteuert wird und so angeordnet ist, daß er mit einem Ventilelement (4, 5) zum Steuern des Durchgangs von Bremsfluid zwischen einem Einlaß und einem Auslaß des Reglers zusammenarbeitet, und einem Hebel, von dem ein Ende mit einem nicht gefederten Punkt des Fahrzeugs verbunden ist, wobei ein dazwischenliegender Punkt (25) des Hebels mit einem dem Kolben (2, 3) gegenüberliegenden Ende des Betätigungsstifts (10), das aus dem Körper (1) hervorsteht, verbunden ist, dadurch gekennzeichnet, daß der Drehzapfen (30) des Hebels mit dem Körper (1) verbunden ist, daß der Betätigungsstift (10) außerdem dazu geeignet ist, von einer elastischen, dichten Membran (13), die im Innern des Körpers (1) eine mit dem Flüiddruck-Meßwertaufnehmer verbundene Kammer mit variablem Volumen (12) bestimmt, in Längsrichtung verschoben zu werden, und daß der Fluid-Meßwertaufnehmer zwischen der Fahrzeugkarosserie und dem entsprechenden Ende einer Aufhängungsfeder des Fahrzeugs angeordnet ist.

2. Regler gemäß Anspruch 1, dadurch gekennzeichnet, daß er außerdem ein elastisches Mittel (20, 40) umfaßt.

3. Regler gemäß Anspruch 2, dadurch gekennzeichnet, daß das elastische Mittel (20) eine Druckfeder ist, die zwischen dem erwähnten dazwischenliegenden Punkt (25) und dem erwähnten Ende des Stifts (10) angeordnet ist.

4. Regler gemäß Anspruch 3, dadurch gekennzeichnet, daß das erwähnte Ende des Stifts (10) mit einem Teller (16) versehen ist, auf dem sich die Feder (20) abstützt.

5. Regler gemäß Anspruch 2, dadurch gekennzeichnet, daß das elastische Mittel eine Zugfeder (40) ist, die zwischen dem erwähnten Ende des Hebels und dem nicht gefederten Punkt des Fahrzeugs angeordnet ist, und daß der erwähnte Stift, der den Hebel im dazwischenliegenden Punkt (25) durchsetzt, an seinem Ende mit einem Bund (36) versehen ist, auf den der Hebel eine ansteigende Kraft ausüben kann.

6. Regler gemäß Anspruch 5, dadurch gekennzeichnet, daß er außerdem eine Druckfeder (45) umfaßt, die sich auf dem Körper abstützt und auf den erwähnten Stift (10) wirkt, wobei sie der von der Zugfeder (40) ausgeübten Kraft entgegenwirkt.

## Claims

1. Brake corrector intended to be subject to the load of a vehicle despite the possible variation in the height of seating of the latter, comprising a fluidic pressure sensor, a body (1) in which is slidably mounted at least one piston (2, 3) controlled by an actuating rod (10) and arranged so as to interact with a valve element (4, 5) in order to control a passage of the brake fluid between an inlet and an outlet of the corrector and comprising a lever one end of which is connected to a non-suspended point of said vehicle, an intermediate point (25) of said lever being connected to an end of the actuating rod (10) opposite the said piston (2, 3) which end projects from said body (1), characterised in that the pivot (30) of said lever is fixed to said body (1), in that said actuating rod (10) is also capable of being driven longitudinally in a translational movement by a sealed flexible diaphragm (13) defining within said body (1) a chamber of variable volume (12) connected to said fluidic pressure sensor and in that said fluidic sensor is arranged between the body and the corresponding end of a suspension spring of the vehicle.

2. Corrector according to Claim 1, characterised in that it also comprises an elastic means (20, 40).

3. Corrector according to Claim 2, characterised in that said elastic means (20) is a compression spring arranged between said intermediate point (25) and said end of the rod (10).

4. Corrector according to Claim 3, characterised in that said end of the rod (10) is equipped with a cup (16), on which said spring (20) bears.

5. Corrector according to Claim 2, characterised in that said elastic means is a draw spring (40) arranged between said end of the lever and said non-suspended point of said vehicle, and in that said rod passing through said lever at said intermediate point (25) is equipped, at its end, with a shoulder (36), on which said lever can exert a rising force.

6. Corrector according to Claim 5, characterised in that it also comprises a compression spring (45) bearing on said body and acting on said rod (10) by opposing the force exerted by said draw spring (40).

FIG : 1

FIG: 2